# EUROPÄISCHE PATENTANMELDUNG

(11) **EP 1 182 782 A2**
(43) Veröffentlichungstag der Anmeldung: **27.02.2002**
(21) Anmeldenummer: 01000391.1
(22) Anmeldetag: 21.08.2001
(51) Int. Cl.: H03M 1/12

(54) **Schaltungsanordnung zum Umwandeln eines analogen Eingangssignals in ein digitales Ausgangssignal**

(30) Priorität: 22.08.2000 DE 10041008
(71) Anmelder: Philips Corporate Intellectual Property GmbH, 52064 Aachen (DE); Koninklijke Philips Electronics N.V., 5621 BA Eindhoven (NL)
(72) Erfinder: de Zeeuw, Stephan, c/o Philips Corp.Int.Prop. GmbH, 52064, Aachen (DE); Nowottnick, Jürgen, c/o Philips Corp.Int.Prop.GmbH, 52064, Aachen (DE)
(74) Vertreter: Volmer, Georg, Dipl.-Ing.

(57) **Zusammenfassung**

Um eine Schaltungsanordnung zum Umwandeln eines vorzugsweise von mindestens einem Empfänger, insbesondere von mindestens einem UHF- oder VHF-Empfänger, aufgenommenen analogen Eingangssignals in ein digitales Ausgangssignal, aufweisend mindestens eine Schwellwertschaltung (30)
mit einem ersten Eingang (32) zum Empfangen des Eingangssignals;
mit einem zweiten Eingang (34) zum Empfangen eines von mindestens einem Bezugsschwellsignaldetektor (20) erzeugten Bezugsschwellsignals; und
mit einem Ausgang (36),
wobei in der Schwellwertschaltung (30) durch Vergleichen des Eingangssignals am ersten Eingang (32) mit dem Bezugsschwellsignal am zweiten Eingang (34) das digitale Ausgangssignal gebildet wird;
mindestens eine mit der Schwellwertschaltung (30) in Verbindung stehende, der Schwellwertschaltung (30) nachgeschaltete Detektorschaltung (40) zum Detektieren von Aussetzern und/oder von Pausen und/oder von Unterbrechungen im Eingangssignal; und mindestens eine mit der Detektorschaltung (40) sowie mit dem Bezugsschwellsignaldetektor (20) in Verbindung stehende Steuerschaltung (50), deren ausgehendes Signal während von der Detektorschaltung (40) detektierten, den Aussetzern und/oder den Pausen und/oder den Unterbrechungen zuordbaren Zeitintervallen (Tₐᵤₛ) das der Schwellwertschaltung (30) zugeführte Bezugsschwellsignal in etwa auf dem Bezugsschwellwert hält, den das Bezugsschwellsignal am Anfang des Aussetzers und/oder der Pause und/oder der Unterbrechung aufweist,
zu schaffen, durch die Pulsbreitenverzerrungen vermindert sowie Verluste einzelner Bits insbesondere am Anfang eines Datenpakets verhindert werden können und durch die digitales Rauschen am Datenausgang unterbunden werden kann, wird vorgeschlagen, dass der Bezugsschwellsignaldetektor (20) das Bezugsschwellsignal aus dem Eingangssignal bildet und mindestens einen Widerstand (22) mit variablem Widerstandswert (R) sowie mindestens ein dem Widerstand (22) nachgeschaltetes kapazitives Element (24) mit Kapazität (C) aufweist und
dass der Widerstand (22) während der den Aussetzern und/oder den Pausen und/oder den Unterbrechungen zuordbaren Zeitintervalle (Tₐᵤₛ) einen ein Entladen des kapazitiven Elements (24) verhindernden hochohmigen Zustand und während der den Aussetzern und/oder den Pausen und/oder den Unterbrechungen nicht zuordbaren Zeitintervalle einen niederohmigen Zustand einnimmt.

## Beschreibung

Die Erfindung betrifft eine Schaltungsanordnung zum Umwandeln eines vorzugsweise von mindestens einem Empfänger, insbesondere von mindestens einem UHF- oder VHF-Empfänger, aufgenommenen analogen Eingangssignals in ein digitales Ausgangssignal, welche Schaltungsanordnung aufweist: mindestens eine Schwellwertschaltung
mit einem ersten Eingang zum Empfangen des Eingangssignals;
mit einem zweiten Eingang zum Empfangen eines von mindestens einem Bezugsschwellsignaldetektor erzeugten Bezugsschwellsignals; und mit einem Ausgang,
wobei in der Schwellwertschaltung durch Vergleichen des Eingangssignals am ersten Eingang mit dem Bezugsschwellsignal am zweiten Eingang das digitale Ausgangssignal gebildet wird;
mindestens eine mit der Schwellwertschaltung in Verbindung stehende, der Schwellwertschaltung nachgeschaltete Detektorschaltung zum Detektieren von Aussetzern und/oder von Pausen und/oder von Unterbrechungen im Eingangssignal; und
mindestens eine mit der Detektorschaltung sowie mit dem Bezugsschwellsignaldetektor in Verbindung stehende Steuerschaltung, deren ausgehendes Signal während von der Detektorschaltung detektierten, den Aussetzern und/oder den Pausen und/oder den Unterbrechungen zuordbaren Zeitintervallen das der Schwellwertschaltung zugeführte Bezugsschwellsignal in etwa auf dem Bezugsschwellwert hält, den das Bezugsschwellsignal am Anfang des Aussetzers und/oder der Pause und/oder der Unterbrechung aufweist.

Eine solche Schaltungsanordnung ist durch die Druckschrift DE 32 40 853 C2 bekannt. Dort ist eine Schaltung beschrieben, bei der ein von einem Aufzeichnungsträger ausgelesenes Inforrnationssignal mittels einer Schwellwertschaltung in ein rechteckförmiges Ausgangssignal umgewandelt, das heißt digitalisiert wird Nun treten bei derartigen Inforrnationssignalen bisweilen unerwüschte Aussetzer auf, die auf das digitalisierte Ausgangssignal einen mehr als störenden Einfluss haben. Um den störenden Einfluss derartiger Aussetzer zu kompensieren, sind bei der bekannten Schaltung eine Detektorschaltung sowie eine Steuerschaltung vorgesehen, durch deren Zusammenwirken während von der Detektorschaltung delektierten, den Aussetzern zuordbaren Zeitintervallen das der Schwellwertschaltung zugeführte Bezugsschwellsignal in etwa auf dem Bezugsschwellwert gehalten wird, den das Bezugsschwellsignal am Anfang des Aussetzers gehabt hat.

Zwar gibt die Druckschrift DE 32 40 853 C2 durchaus sinnvolle Anregungen zur Lösung der Frage, wie derartige Aussetzer im eingehenden Informationssignal buchstäblich "überbrückt", das heißt ausgeglichen werden können; gleichwohl hat sich bei der praktischen Realisierung der bekannten Schaltung herausgestellt, dass diese insbesondere im Falle eines Einsatzes bei heutzutage üblichen digitalen Funkübertragungssystemen - man denke etwa an Funkdatensysteme auf U(ltra-)H(igh-)F(requency)- oder auf V(ery-)H(igh)F(requency)-Basis, wie beispielsweise Alarmsanlagen, Garagentoröffner, Heizungssteuerungsanlagen, Kraftfahrzeug-Funksysteme (PKE = passive keyless entry, RKE = remote keyless entry)-mit der Verarbeitung von einzelnen Datenpaketen überfordert ist, und zwar insbesondere dann, wenn derartige einzelne Datenpakete systembedingt durch größere zeitliche Abstände voneinander getrennt sind.

So ist die bekannte Schaltung nur für zentrale, auf einem kontinuierlichen Datenstrom gespeicherter Daten basierende Ausleseverfahren und demzufolge nur für sporadische ungewollte Aussetzer im eingehenden Informationssignal ausgelegt, nicht jedoch für bei der Funkdatenübertragung systembedingt vorhandene und mithin gewollte zeitliche Pausen und Unterbrechungen zwischen den einzelnen Datenpaketen. Weiterhin ist bei der bekannten Schaltung als unvorteilhaft zu vermerken, dass das Bezugsschwellsignal aus dem bereits digitalisierten Ausgangssignal gewonnen wird, das heißt die bekannte Schaltung in Form eines Regelkreises implementiert ist, so dass eine dezentrale Anordnung der bekannten Schaltung - wenn überhaupt - nur unter unverhältnismäßig hohem Aurwand realisietbar ist.

Der Erfindung liegt die Aufgabe zugrunde, eine Schaltungsanordnung der eingangs genannten Art bereitzustellen, die dezentral auslegbar ist, so dass verkhiedene Elemente der Schaltungsanordnung auch auf verschiedenen Komponenten oder sogar auf verschiedenen integrierten Schaltungen (= ICs = integrated circuits) oder auf verschiedenen Mikro-Schaltungen (= µCs = micro circuits) angeordnet sein können; des weiteren sollen durch die angestrebte Schaltungsanordnung Fulabreitenverzerrungen vermindert sowie Verluste einzelner Bits, insbesondere am Anfang eines Datenpakets, verhindert und digitales Rauschen am Datenausgang unterbunden werden.

Diese Aufgabe wird durch die im Anspruch 1 angegebenen Merkmale gelöst. Vorteilhafte Ausgestaltungen und zweckmäßige Weiterbildungen der vorliegenden Erfindung sind in den Unteransprüchen gekennzeichnet.

Gemäß der Lehre der vorliegenden Erfindung weist der Bezugsschwellsignaldetektor mindestens einen Widerstand mit variablem Widerstandswert R sowie mindestens ein dem Widerstand nachgeschaltetes kapazitives Element mit Kapazität C auf, wobei der Widerstand während der den Aussetzern und/oder den Pausen und/oder den Unterbrechungen zuordbaren Zeitintervalle einen ein Entladen des kapazitiven Elements verhindernden hochohmigen Zustand und während der den Aussetzern und/oder den Pausen und/oder den Unterbrechungen nicht zuordbaren Zeitintervalle einen niederohmigen Zustand einnimmt.

Dies bedeutet mit anderen Worten, dass bei der vorliegenden Erfindung gewissermaßen eine "track-and-hold"-Schaltungsanordnung verwirklicht ist: Während der Übertragung von Daten (= den Aussetzern und/oder den Pausen und/oder den Unterbrechungen nicht zuordbare Zeitintervalle), bei der sich der Widerstand im niederohmigen Zustand befindet, besteht eine niederohmige Verbindung zum kapazitiven Element, so dass sich der Schwellenpegel des Bezugsschwellsignals in zweckmäßiger Weise an den Pegel des Eingangssignals anpassen, dasheißt adaptieren kann (sogenannter "track"-Modus); hierbei liegt das Eingangssignal in bevorzugter Weise in Form eines im Empfänger umgewandelten niederfrequenten analogen Basisbandsignals vor.

Zwischen den einzelnen Datenpaketen (= den Aussetzern und/oder den Pausen und/oder den Unterbrechungen zuordbare Zeitintervalle) hingegen wird der Pegel des Bezugsschwellsignals fixiert, indem sich der Widerstand im hochohmigen Zustand befindet, was de facto eine Trennung der Verbindung zum kapazitiven Element bedeutet (sogenannter "hold"-Modus); hierdurch wird verhindert, dass sich das kapazitive Element während der den Aussetzern und/oder den Pausen und/oder den Unterbrechungen zuordbaren Zeitintervallen aufgrund des fehlenden Basisbandsignals entlädt, was veränderte Pulabreiten oder sogar fehlende Bits zu Beginn eines jeden Datenpakets nach sich zöge.

Aus den vorgenannten Gründen muss bei konventionellen Schaltungsanordnungen, wie sie beispielsweise in der Druckschrift DE 32 40 853 C2 offenbart sind, die sich als Produkt des Widerstandswerts R und der Kapazität C ergebende Zeitkonstante τ = R·C des Bezugsschwellsignaldetektors sehr groß gewählt werden, was zu einer langen Einschwingzeit des Empfängers führt.

Bei Empfängern mit konventionellen Schaltungsanordnungen ohne am zweiten Eingang der Schwellwertschaltung insbesondere mittels eines Zusatzwiderstands einstellbaren zusätzlichen festen Referenzwert führt das Entladen des kapazitiven Elements ferner zu digitalem Rauschen am Datenausgang. Dieses zufällige und ungewollte digitale Rauschsignal wird von einem nachfolgenden Controller unter Umständen als korrektes Signal interpretiert und zieht Verletzungen des digitalen Datenprotokolls nach sich Ein zusätzlicher, fest eingestellter Referenzwert an der Schwellwertschaltung würde jedoch die Empfindlichkeit des Empfängers und mithin die Reichweite des Funkübertragungssystems nachhaltig beeinträchtigen.

Der Fachmann wird in diesem Zusammenhang in bezug auf die Lehre der vorliegenden Erfindung besonders zu schätzen wissen, dass der Bezugsschwellsignaldetektor das Bezugsschwellsignal aus dem Eingangssignal, das heißt vorzugsweise aus dem im Empfänger umgewandelten niederfrequenten analogen Basisbandsignal bildet. Hierdurch können die zeitlichen Längen der "track-and-hold"-Modi mit besonderem Vorteil auf das in der jeweiligen Applikation eingesetzte Daten- und Übertragungsprotokoll angepasst werden. Hierbei sollte nicht unerwähnt bleiben, dass gemäß einer weiteren vorteilhaften Ausführungsoption der vorliegenden Erfindung die Schwellwertschaltung durch einen Komparator gebildet ist, dessen erster Eingang positiv und dessen zweiter Eingang negativ ist; dies ist bei der Schaltungsanordnung gemäß der Druckschrift DE 32 40 853 C2 nicht der Fall.

Die Erfindung betrifft auch einen Empfänger, insbesondere UHF- oder VHF-Empfänger, auflösend mindestens eine nachgeschaltete Schaltungsanordnung der vorstehend beschriebenen Art.

Ein Ausführungsbeispiel der vorliegenden Erfindung wird nachstehend anhand der Zeichnung näher erläutert. Es zeigt:

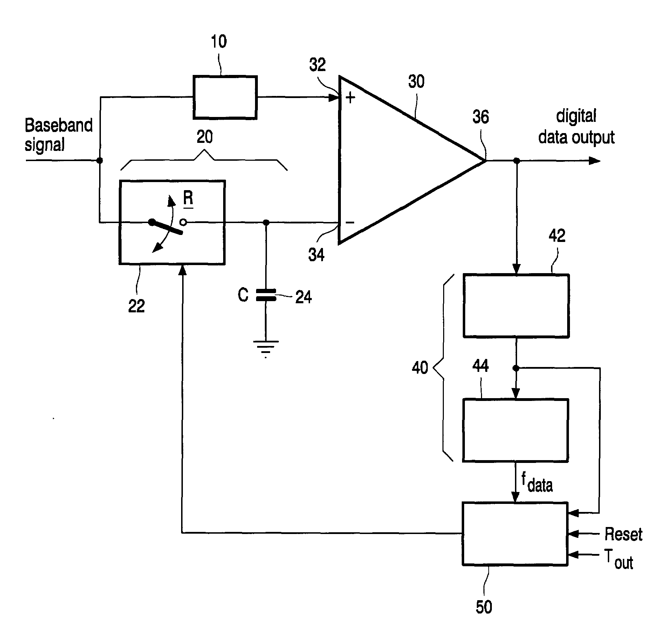

- Fig. 1: ein Ausführungsbeispiel einer Schaltungsanordnung gemäß der vorliegenden Erfindung, in schematischer Prinzipdarstellung.

Die Schaltungsanordnung 100 ist zum Umwandeln eines von einem UHF- oder VHF-Empfänger aufgenommenen analogen Eingangssignals in ein digitales Ausgangssignal vorgesehen und zeichnet sich dadurch aus, dass sie im Bedarfsfalle auch auf mehrere Komponenten verteilt realisierbar ist (beispielsweise Empfänger mit integriertem Schalter und Steuerung mittels angeschlossenen Controllers).

Die Schaltungsanordnung 100 weist eine als Komparator ausgebildete Schwellwertschaltung 30 mit einem positiven ersten Eingang 32 zum Empfangen des Eingangssignals, mit einem negativen zweiten Eingang 34 zum Empfangen eines von einem Bezugsschwellsignaldetektor 20 erzeugten Bezugsschwellsignals und mit einem Ausgang 36 auf. An den ersten Eingang 32 der Schwellwertschaltung 30 wird das Eingangssignal in Form eines im Empfänger umgewandelten niederfrequenten analogen Basisbandsignals angelegt, nachdem es in einer dem ersten Eingang 32 der Schwellwertschaltung 30 vorgeschalteten Filterstufe 10 gefiltert worden ist.

Der Bezugsschwellsignaldetektor 20 umfasst ein sogenanntes RC-Glied oder Zeitglied, das einen Widerstand 22 mit variablem Widerstandswert R sowie ein dem Widerstand 22 nachgsschaltetes, als Kondensator ausgeführtes kapazitives Element 24 mit Kapazität C aufweist (das RC-Glied ist in diesem Zusammenhang so ausgelegt, dass es eine Grenzfrequenz aufweist, die niedriger als die Datenfrequenz f_{data} ist). Aus dem vorliegenden niederfrequenten Basisbandsignal generiert der Bezugsschwellsignaldetektor 20 das adaptive Bezugsschwellsignal, das an den zweiten Eingang 34 der Schwellwertschaltung 30 geführt wird. Durch Vergleichen des Eingangssignals am ersten Eingang 32 mit dem Bezugsschwellsignal am zweiten Eingang 34 wird durch die Schwellwertschaltung 30 ein Ausgangssignal in binärer Form geliefert, dessen Wert durch die Tatsache bestimmt ist, ob das Eingangssignal größer oder kleiner als das Bezugsschwellsignal ist; mithin fungiert die Schwellwertschaltung 30 als Analog-Digital-Wandler (= ADC = analog to digital converter).

Da sich die Datenprotokolle in heutzutage eingesetzten Funkdatensystemen in der Regel aus einzelnen Datenpaketen zusammensetzen, die systembedingt durch größere zeitliche Abstände Tₐᵤₛ (--> Aussetzer und/oder Pausen und/oder Unterbrechungen) voneinander getrennt sind, weist das Eingangssignal naturgemäß derartige Aussetzer und/oder Pausen und/oder Unterbrechungen auf. Um ein Entladen des kapazitiven Elements 24 während der den Aussetzern und/oder den Pausen und/oder den Unterbrechungen zuordbaren Zeitintervalle Tₐᵤₛ zu verhindern, nimmt der Widerstand 22 in den Zeiträumen zwischen den Datenpaketen einen ein Entladen des kapazitiven Elements 24 verhindernden hochohmigen Zustand ein.

Um nun Aussetzer und/oder Pausen und/oder Unterbrechungen im Eingangssignal genau und zuverlässig feststellen zu können, ist eine mit der Schwellwertschaltung 30 in Verbindung stehende, der Schwellwertschaltung 30 nachgeschaltete Detektorschaltung 40 vorgesehen. Diese Detektorschaltung 40 weist eine Flankendetektoreinheit 42 sowie mindestens eine mit der Flankendetektoreinheit 42 in Verbindung stehende Taktgewinnungseinheit 44 auf. Mittels der Flankendetektoreinheit 42 wird aus dem den Ausgang 36 der Schwellwertschaltung 30 verlassenden digitalisierten Ausgangssignal durch die Taktgewinnungseinheit 44 der Datentakt f_{data} regeneriert, das heißt zurückgewonnen; anhand dieses vorliegenden Datentakts f_{data} ist erkennbar, ob Signalflanken in zeitlich definierten Abständen auftreten oder nicht, woraufhin das ausgehende Signal einer sowohl mit der Detektorschaltung 40 als auch mit dem Bezugsschwellsignaldetektor 20 in Verbindung stehenden Steuerschaltung 50 entweder die niederohmige Verbindung ("track"-Modus) oder die hochohmige Verbindung ("hold"-Modus) zwischen dem niederfrequenten Basisbandsignal und dem kapazitiven Element 24 bewirkt; zu diesem Zwerke weist die Steuerschaltung 50 eine mit der Flankendetektoreinheit 42 und mit der Taktgewinnungseinheit 44 in Verbindung stehende Entscheidereinheit aufweist, deren jeweiliges ausgebendes Signal den Widerstand 22 in den hochohmigen Zustand oder in den niederohmigen Zustand versetzt.

Hierbei nimmt der Widerstand 22 bei Vorliegen sogenannter "gültiger" Signalflanken, das heißt bei Vorliegen von Signalflanken innerhalb zeitlich definierter Abstände (= den Aus-Setzern und/oder den Pausen und/oder den Unterbrechungen nicht zuordbare Zeitintervalle, das heißt es erfolgt kein Aussetzer und/oder keine Pause und/oder keine Unterbrechung des eingehenden Datenstroms) den niederohmigen Zustand ein, innerhalb dessen der Schwellenpegel des adaptiven Bezugsschwellsignals auf den jeweils aktuellen Basisbandpegel innerhalb der einzelnen Datenpakete des Eingangssignals einstellbar ist.

Hingegen wird im "hold"-Modus (= hochohmiger Zustand des Widerstands 24) der adaptive Schwellenpegel des Bezugsschwellsignals gewissermaßen "eingefroren", indem das von der Steuerschaltung 50 ausgehende Signal während der von der Detektorschaltung 40 detektierten, den Aussetzern und/oder den Pausen und/oder den Unterbrechungen zuordbaren Zeitintervalle Tₐᵤₛ das der Schwellwertschaltung 30 zugeführte Bezugsschwellsignal in etwa auf dem Bezugsschwellwert hält, den das Bezugsschwellsignal am Anfang des Aussetzers und/oder der Pause und/oder der Unterbrechung aufweist; dies ist gleichbedeutend damit, dass im definierten Zeitraum Tₐᵤₛ keine Signalflanken auftreten, wobei dieser Zeitraum Tₐᵤₛ entsprechend klein gewählt sein sollte, um ein zu starkes Entladen des kapazitiven Elements 24 zu verhindern; bei biphasiger Kodierung bietet sich beispielsweise ein Zeitraum Tₐᵤₛ = 2/f_{data} an, wobei f_{data} der vorstehend definierte, durch die Taktgewinnungseinheit 44 regenerierte Datentakt ist.

Es bedarf in bezug auf das anhand Figur 1 veranschaulichte Ausführungsbeispiel der Schaltungsanordnung 100 einer besonderen Erwähnung, dass die Steuerschaltung 50 eine sowohl extern als auch intern auslösbare Reset-Funktion aufweist. Hierbei nimmt der Widerstand 22 nach Auslösen der Reset-Funktion den niederohmigen Zustand ein, wobei das kapazitive Element 24 nach Auslösen der Reset-Funktion mit besonderem Vorteil auf einen bestimmten Kapazitätswert Cₜ aufladbar ist; hierdurch kann das Einrichten eines zusätzlichen festen Referenzwerts am zweiten Eingang 34 der Schwellwertstaltung 30, beispielsweise mittels eines Zusatzwiderstands, entfallen.

Zusammenfassend lässt sich feststellen, dass durch das in Figur 1 dargestellte Ausführungsbeispiel der Schaltungsanordnung 100 gemäß der vorliegenden Erfindung sowohl Pulsbreitenverzerrungen als auch Verluste von einzelnen Bits zu Beginn eines Datenpakets verhindert werden können; demzufolge liegen am digitalen Datenausgang des Empfängers früher korrekte Ausgangssignale vor, so dass der vorliegenden Schaltungsanordnung 100 eine erhöhte Fehlersicherheit immanent ist.

Des weiteren lässt sich nach einem ersten Fixieren des adaptiven Bezugsschwellsignals digitales Rauschen am digitalen Datenausgang unterbinden, so dass ein oder mehrere an den Empfänger angeschlossene Controller in der Folge eine geringere Interruptlast haben; hierdurch sind die Auslastung des Controllers sowie die Buslast eventuell angeschalteter Bussysteme geringer.

Schließlich soll nicht unerwähnt bleiben, dass die in Figur 1 exemplarisch gezeigte Schaltungsanordnung 100 eine "back up"-Funktion für den Fall einer externen Störung aufweist: So kann der Pegel des Bezugsschwellsignals bei Vorliegen starker externer Inbandstörer im "track"-Modus unzulässig weit angehoben werden, so dass ein regulärer Datenempfang nicht mehr möglich wäre, denn der Pegel des Nutzsignals läge im Basisband weit unterhalb des aktuellen fehlerhaften Bezugsschwellsignalwerts; für diesen unerwüschten, aber nicht mit absoluter Sicherheit zu vermeidenden Falle ist die Schaltungsanordnung 100 insofern ausgelegt, als der "hold"-Modus nach einem vordefinierten, in Abhängigkeit vom eingesetzten Übertragungsprotokoll zu wählenden Zeitintervall mittels eines selbstbetätigt ausgelösten Reset verlassen werden kann.

Im Ergebnis kann die Schaltungsanordnung 100 und hierbei insbesondere die Steuerschaltung 50 flexibel auf unterschiedliche Protokolle, Inbandstörer oder dergleichenerforderlichenfalls mit einem Reset - reagieren; wesentliche Grundlage des in der Steuerschaltung 50 erfolgenden Entscheidungsprozesses ist hierbei der aus dem digitalisierten Ausgangssignal zurückgewonnene Datentakt f_{data}.

### Bezugszeichenliste

- 100: Schaltungsanordnung
- 10: Filterstufe
- 20: Bezugsschwellsignaldetektor
- 22: Widerstand mit variablem Widerstandswert R
- 24: kapazitives Element mit Kapazität C
- 30: Schwellwertschaltung
- 32: erster Eingang der Schwellwertschaltung 30
- 34: zweiter Eingang der Schwellwertschaltung 30
- 36: Ausgang der Schwellwertschaltung 30
- 40: Detektorschaltung
- 42: Flankendetektoreinheit
- 44: Taktgewinnungseinheit
- 50: Steuerschaltung
- C: Kapazität des kapazitiven Elements 24
- f_{data}: Datenfrequenz = Datentakt
- R: variabler Widerstandswert des Widerstands 22
- Tₐᵤₛ: von der Detektorschaltung 40 detektiertes, den Aussetzern und/oder den Pausen und/öder den Unterbrechungen zuordbares Zeitintervall

## Patentansprüche

1. Schaltungsanordnung zum Umwandeln eines vorzugsweise von mindestens einem Empfänger, insbesondere von mindestens einem UHF- oder VHF-Empfänger, aufgenommenen analogen Eingangssignals in ein digitales Ausgangssignal, welche Schaltungsanordnung (100) aufweist:
mindestens eine Schwellwertschaltung (30) mit einem ersten Eingang (32) zum Empfangen des Eingangssignals;
mit einem zweiten Eingang (34) zum Empfangen eines von mindestens einem Bezugsschwellsignaldetektor (20) erzeugten Bezuschwellsignals; und
mit einem Ausgang (36),
wobei in der Schwdllwrtkhaltung (30) durch Vergleichen des Eingangssignals am ersten Eingang (32) mit dem Bezugsschwellsignal am zweiten Eingang (34) das digitale Ausgangssignal gebildet wird;
mindestens eine mit der Schwellwertschaltung (30) in Verbindung stehende, der Schwellwertschaltung (30) nachgeschaltete Detektorschaltung (40) zum Detektieren von Aussetzern und/oder von Pausen und/oder von Unterbrechungen im Eingangsignal; und
mindestens eine mit der Detektorschaltung (40) sowie mit dem Bezugsschwellsignaldetektor (20) in Verbindung stehende Steuerschaltung (50), deren ausgehendes Signal während von der Detektorschaltung (40) detektierten, den Aussetzern und/oder den Pausen und/oder den Unterbrechungen zuordbaren Zeitintervallen (Tₐᵤₛ) das der Schwellwertschaltung (30) zugeführte Bezugsschwellsignal in etwa auf dem Bezugsschwellwert hält, den das Bezugsschwellsignal am Anfang des Aussetzers und/oder der Pause und/oder der Unterbrechung aufweist,
**dadurch gekennzeichnet,**
**dass** der Bezugsschwellsignaldetektor (20) das Bezugsschwellssignal aus dem Eingangssignal bildet und mindestens einen Widerstand (22) mit variablem Widerstandswert (R) sowie mindestens ein dem Widerstand (22) nachgeschaltetes kapazitives Element (24) mit Kapazität (C) aufweist und
**dass** der Widerstand (22) während der den Aussetzern und/oder den Pausen und/oder den Unterbrechungen zuordbaren Zeitintervalle (Tₐᵤₛ) einen ein Entladen des kapazitiven Elements (24) verhindernden hochohmigen Zustand und während der den Aussetzern und/oder den Pausen und/oder den Unterbrechungen nicht zuordbaren Zeitintervalle einen niederohmigen Zustand einnimmt.

2. Schaltungsanordnung gemäß Anspruch 1,
**dadurch gekennzeichnet,**
**dass** das Eingangssignal in Form eines im Empfänger umgewandelten niederfrequenten analogen Basisoandsignls vorliegt.

3. Schaltungsanordnung gemäß Anspruch 1 oder 2,
**dadurch gekennzeichnet,**
**dass** dem ersten Eingang (32) der Schwellwertschaltung (30) mindestens eine Filterstufe (10) vorgeschaltet ist.

4. Schaltungsanordnung gemäß mindestens einem der Ansprüche 1 bis 3,
**dadurch gekennzeichnet,**
**dass** sich der Schwellenpegel des Bezugsschwellsignals im niederohmigen Zustand des Widerstands (22) an den Pegel des Eingangssignals adaptiert.

5. Schaltungsanordnung gemäß mindestens einem der Ansprüche 1 bis 4,
**dadurch gekennzeichnet,**
**dass** die Schwellwertschaltung (30) durch einen Komparator gebildet ist, dessen erster Eingang (32) positiv und dessen zweiter Eingang (34) negativ ist.

6. Schaltungsanordnung gemäß mindestens einem der Ansprüche 1 bis 5,
**dadurch gekennzeichnet,**
**dass** die Detektorschaltung (40) mindestens eine Flankendetektoreinheit (42) sowie mindestens eine mit der Flankendetektoreinheit (42) in Verbindung stehende Taktgewinnungseinheit (44) aufweist und
**dass** die Detektorschaltung (40) aus dem digitalen Ausgangssignal den Datentakt (f_{data}) regeneriert.

7. Schaltungsanordnung gemäß Anspruch 6,
**dadurch gekennzeichnet,**
**dass** die Steuerschaltung (50) mindestens eine mit der Flankendetektoreinheit (42) und mit der Taktgewinnungseinheit (44) in Verbindung stehende Entscheidereinheit aufweist, deren jeweiliges ausgehendes Signal den Widerstand (22) in den hochohmigen Zustand oder in den niederohmigen Zustand versetzt.

8. Schaltungsanordnung gemäß mindestens einem der Ansprüche 1 bis 7,
**dadurch gekennzeichnet,**
**dass** die Steuerschaltung (50) eine extern und/oder intern auslösbare Reset-Funktion aufweist.

9. Schaltungsanordnung gemäß Anspruch 8,
**dadurch gekennzeichnet,**
**dass** der Widerstand (22) nach Auslösen der Reset-Funktion der Steuerschaltung (50) den niederohmigen Zustand einnimmt.

10. Schaltungsanordnung gemäß Anspruch 8 oder 9,
**dadurch gekennzeichnet,**
**dass** das kapazitive Element (24) nach Auslösen der Reset-Funktion der Steuerschaltung (50) auf einen bestimmten Kapazitätswert (Cₜ) aufladbar ist.

11. Schaltungsanordnung gemäß mindestens einem der Ansprüche 1 bis 10,
**dadurch gekennzeichnet,**
**dass** das kapazitive Element (24) als mindestens ein Kondensator ausgebildet ist.

12. Schaltungsanordnung gemäß mindestens einem der Ansprüche 1 bis 11,
**dadurch gekennzeichnet,**
**dass** am zweiten Eingang (34) der Schwellwertschaltung (30) insbesondere mittels eines Zusatzwiderstands ein zusätzlicher fester Referenzwert einstellbar ist.

13. Empfänger, insbesondere UHF- oder VHF-Empfänger, aufweisend mindestens eine nachgeschaltete Schaltungsanordnung (100) gemäß mindestens einem der Ansprüche 1 bis 12.
